# FASCICULE DE BREVET EUROPEEN

(11) **EP 3 037 277 B1**
(45) Date de publication et mention de la délivrance du brevet: **10.10.2018**
(21) Numéro de dépôt: 15307010.7
(22) Date de dépôt: 15.12.2015
(51) Int. Cl.: B60B 7/00, B60B 7/06, B60B 7/08, B60B 7/12, B60B 7/04, B60B 7/10

(54) **ENJOLIVEUR POUR UNE ROUE DE VEHICULE AUTOMOBILE COMPORTANT UN ELEMENT MOBILE DE VERROUILLAGE PORTANT DES PATTES FLEXIBLES**
ZIERELEMENT EINES KRAFTFAHRZEUGRADS, DAS MIT EINEM BEWEGLICHEN VERSCHLUSSELEMENT MIT FLEXIBLEN LASCHEN AUSGESTATTET IST
COVER FOR A WHEEL OF A MOTOR VEHICLE COMPRISING A MOVABLE LOCKING ELEMENT WITH FLEXIBLE TABS

(43) Date de publication de la demande: 29.06.2016
(73) Titulaire: Renault S.A.S., 92100 Boulogne-Billancourt (FR)
(72) Inventeur: MASI, Vincent, 75020 PARIS (FR); CELLINI, Johan, 91590 LA FERTE ALAIS (FR); EKMESCIC, Omer, 92700 COLOMBES (FR)

(56) Documents cités:
- EP-A1- 0 497 640
- EP-A1- 1 724 124
- DE-C1- 3 512 210
- DE-U1- 8 534 757
- ES-A1- 2 289 874
- US-A1- 2005 173 969

## Description

### DOMAINE TECHNIQUE DE L'INVENTION

L'invention concerne un enjoliveur destiné à être fixé à une roue de véhicule automobile tournant autour d'un axe d'orientation axiale, l'enjoliveur comportant :
- un chapeau radial de roue qui est destiné à être monté par emboîtement axial sur la roue pour en recouvrir au moins une partie, une face arrière du chapeau étant tournée vers la roue ;
- plusieurs pattes de fixation qui sont flexibles entre une position de fixation dans laquelle une partie de fixation de chaque patte de fixation est destinée à être emboîtée élastiquement avec une partie de fixation correspondante de forme complémentaire de la roue, et vers laquelle chaque patte de fixation est rappelée élastiquement, et une position de libération dans laquelle chaque patte de fixation est destinée à être déboîtée.

### ARRIERE PLAN TECHNIQUE DE L'INVENTION

Les roues de véhicule automobile présentent parfois un aspect peu esthétique. C'est notamment le cas lorsqu'un moyeu central de la roue est visible depuis l'extérieur. Ce moyeu est d'autant plus inesthétique que le reste de la roue présente un aspect esthétique soigné, comme c'est par exemple le cas des roues en aluminium.

Pour remédier à ce problème, on a déjà proposé de cacher ce moyeu central au moyen d'un enjoliveur central qui est emboîté axialement dans un logement central de la roue. Cet enjoliveur est fixé sur la roue par des moyens d'emboîtement élastique. L'extraction de l'enjoliveur ainsi monté nécessite l'utilisation d'une clé spécialement conçue pour fournir l'effort requis par effet de levier en prenant appui sur la roue. A cet effet, l'enjoliveur est muni d'un trou relativement petit dans lequel la clé est insérée.

Cependant, cette solution n'est pas satisfaisante car le propriétaire du véhicule risque de perdre cette clé. Il devient alors difficile de réaliser une opération de changement de roue.

De plus, bien que le trou sur l'enjoliveur soit réalisé de manière la plus discrète possible, il reste néanmoins visible, dégradant ainsi l'aspect esthétique général de la roue.

En outre, l'enjoliveur doit être suffisamment résistant pour supporter l'effort exercé par la clé lors de son extraction. Un tel enjoliveur est donc onéreux à fabriquer.

On a aussi proposé de visser l'enjoliveur sur la roue au moyen de vis discrètes. Néanmoins, un tel dispositif requiert encore l'utilisation d'outils adaptés tout en dégradant l'aspect esthétique de la roue.

Le document DE 85 34 757 U1 montre un enjoliveur selon l'état de la technique.

### BREF RESUME DE L'INVENTION

L'invention propose de remédier à ces problèmes en proposant un enjoliveur du type décrit précédemment, caractérisé en ce que les pattes de fixation sont portées par un élément commun de verrouillage qui est monté mobile dans le chapeau entre une position de verrouillage dans laquelle les pattes de fixation occupent leur position de fixation et une position de déverrouillage dans laquelle les pattes de fixation sont contraintes vers leur position de libération par contact entre chaque patte et une face associée de guidage du chapeau.

Selon d'autres caractéristiques de l'invention :
- chaque patte de verrouillage s'étend axialement ;
- la partie de fixation de chaque patte est formée par une partie mâle ;
- l'élément de verrouillage est monté coulissant axialement dans une jupe fixe du chapeau qui s'étend axialement depuis la face arrière du chapeau ;
- la jupe est munie de fenêtres de passage de la partie de fixation de chaque patte de fixation à l'extérieur de la jupe lorsque l'élément de verrouillage occupe sa position de verrouillage, chaque fenêtre étant destinée à être agencée en vis-à-vis d'une partie de fixation associée de la roue ;
- les pattes de fixation sont réalisées en une seule pièce avec l'élément de verrouillage ;
- les pattes de fixation sont guidées vers leur position de libération lors du coulissement de l'élément de verrouillage vers sa position de déverrouillage par contact entre une rampe de guidage portée par chaque patte avec un bord de la fenêtre ;
- en position arrière de déverrouillage de l'élément de verrouillage, la rampe de guidage demeure en contact avec le bord de la fenêtre de manière que l'élément de verrouillage soit rappelé élastiquement vers sa position de verrouillage par l'effort de rappel élastique des pattes de fixation vers leur position de fixation ;
- les pattes de fixation sont portées par l'élément de verrouillage selon un agencement circulaire, les moyens de rappel élastiques étant formés par un anneau élastique commun à toutes les pattes qui est monté précontraint entre les faces internes des pattes de fixation ;
- l'élément de verrouillage est muni d'un bouton d'actionnement qui traverse le chapeau de verrouillage après son montage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente une roue de véhicule automobile qui est équipée d'un enjoliveur réalisé selon les enseignements de l'invention ;
- la figure 2 est une vue en perspective qui représente uniquement l'enjoliveur de la figure 1 ;
- la figure 3 est une vue en perspective qui représente la face arrière d'un chapeau de l'enjoliveur ;
- la figure 4 est une vue en perspective qui représente un élément de verrouillage de l'enjoliveur ;
- la figure 5 est une vue en coupe selon le plan de coupe 4-4 de la figure 1 qui représente l'élément de verrouillage en position verrouillée en traits pleins et l'élément de verrouillage en position déverrouillée en traits interrompus.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif une orientation axiale parallèle à l'axe de rotation de la roue et dirigée d'arrière en avant selon la flèche "A" des figures. On adoptera aussi des orientations radiales dirigées radialement depuis l'intérieur à proximité de l'axe de rotation de la roue, vers l'extérieur en s'éloignant dudit axe.

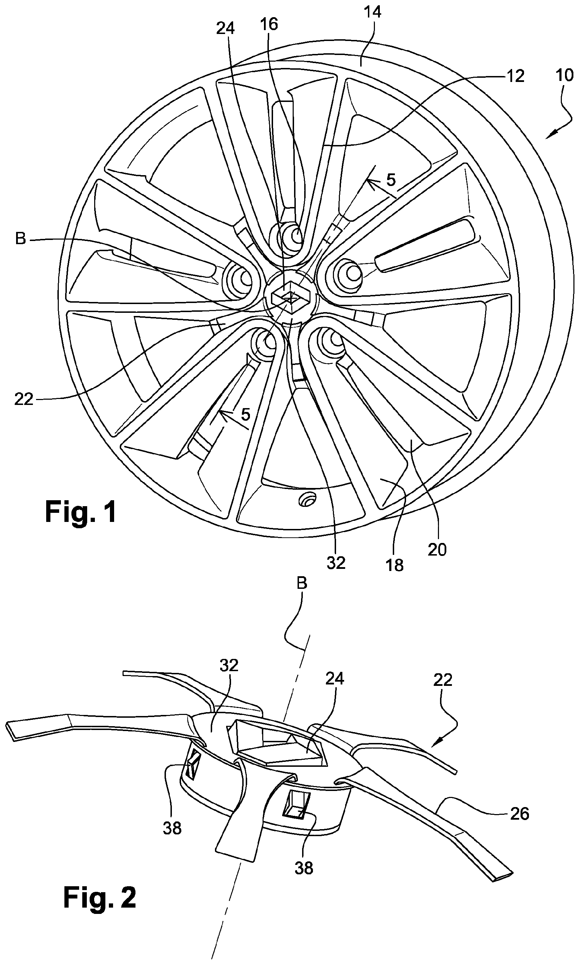

On a représenté à la figure 1 une roue 10 de véhicule automobile (non représenté), ici réalisée en aluminium. La roue 10 présente un axe "B" d'orientation axial depuis lequel s'étend un flasque 12 radial qui porte, à sa périphérie, une jante 14.

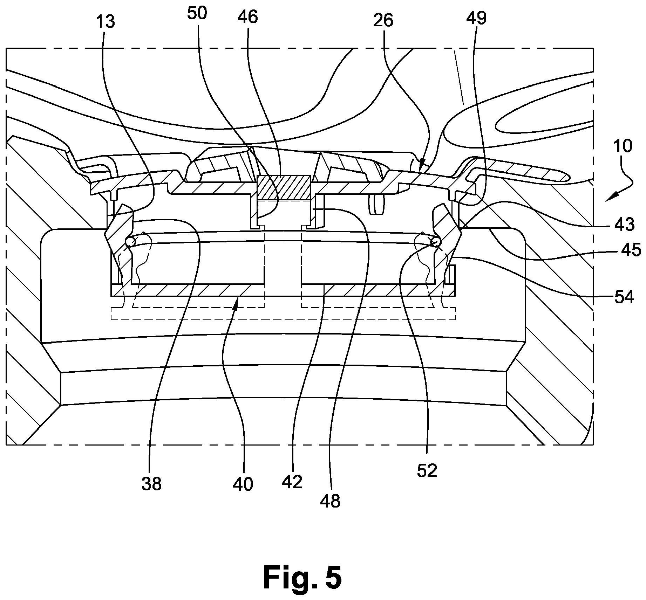

Le flasque 12 comporte en son centre un orifice d'accès à un moyeu 13 visible à la figure 5. Autour du moyeu 13, cinq orifices 16 de passage d'écrous de fixation sont disposés régulièrement en cercle.

Le flasque 12 présente ici un aspect esthétique destiné à le rendre agréable à regarder. Dans le mode de réalisation représenté aux figures, cinq rayons 18 s'étendent chacun depuis un orifice 16 de passage associé. Ces rayons sont percés d'une fente 20 radiale destiné à rendre le dessin de la roue 10 plus léger visuellement.

Le moyeu 13 central de la roue 10 est considéré comme un élément peu esthétique. A cet effet, il est destiné à être recouvert par un enjoliveur 22 qui présente ici en son centre un logo 24.

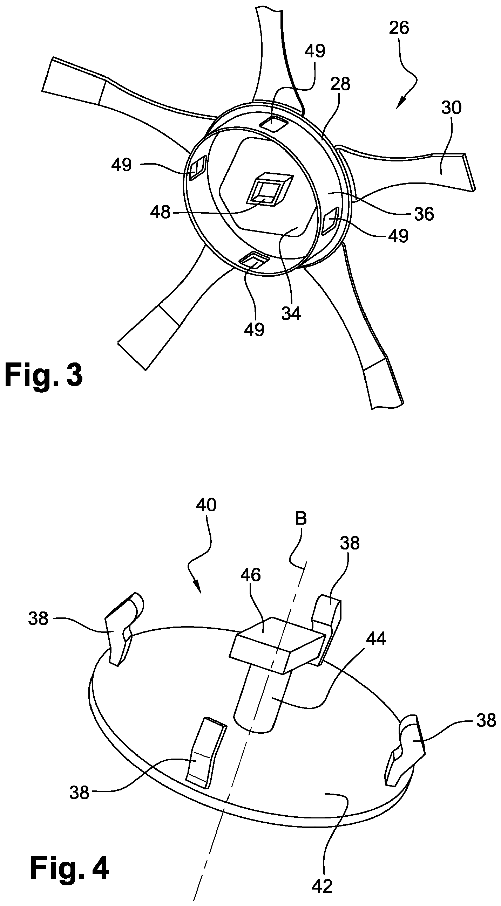

Comme représenté aux figures 2 et 3, l'enjoliveur 22 comporte un chapeau 26 radial de roue qui est destiné à être monté par emboîtement axial sur la roue 10 pour en recouvrir au moins le moyeu 13 central.

Le chapeau 26 présente ici un disque 28 radial central depuis lequel rayonnent cinq bras 30. Le disque 28 est destiné à être coaxial avec l'axe "B" de la roue 10. Le disque 28 présente un diamètre suffisant pour recouvrir le moyeu 13 central de la roue 10. Les bras 30 sont quant à eux destinés à être insérés dans les espaces réservés circonférentiellement entre chaque rayon 18 de la roue 10.

Les bras 30 s'étendent jusqu'à une extrémité libre qui est alignée sensiblement sur le même cercle que les orifices 16 de fixation de la roue. Cette caractéristique présente ici un intérêt purement esthétique.

Comme représenté aux figures 1 et 2, le disque 28 central du chapeau 26 présente ainsi une face 32 avant qui est visible depuis l'extérieur lorsque l'enjoliveur 22 est monté sur la roue 10. Le disque 28 central comporte aussi une face 34 opposée arrière qui est tournée vers le moyeu 13 central de la roue 10, comme cela est illustré à la figure 3.

Le disque 28 central comporte une jupe 36 cylindrique fixe qui s'étend axialement depuis sa face 34 arrière. Cette jupe 36 présente un diamètre extérieur correspondant au diamètre intérieur de l'orifice d'accès au moyeu 13 central de la roue 10. Le disque 28 présentant un diamètre extérieur légèrement plus grand que celui de l'orifice d'accès au moyeu 13 central, il demeure une bande périphérique annulaire libre entre la jupe 36 et le bord périphérique du disque 28. Cette jupe 36 est ainsi destinée à être insérée axialement dans le moyeu 13 central lors du montage de l'enjoliveur 22 sur la roue 10.

Comme représenté à la figure 4, l'enjoliveur 22 comporte aussi plusieurs pattes 38 de fixation qui sont destinées à fixer l'enjoliveur 22 sur la roue 10 par emboîtement élastique.

Les pattes 38 de fixation sont portées par un élément 40 commun de verrouillage qui est destiné à être monté coulissant axialement dans la jupe 36 du chapeau 26.

L'élément 40 de verrouillage comporte un plateau 42 radial circulaire à la périphérie duquel quatre pattes 38 de fixation sont régulièrement réparties. Les pattes 38 de fixation s'étendent axialement vers l'avant depuis une face avant dudit plateau 40.

Les pattes 38 de fixation sont ici réalisées en une seule pièce avec le plateau 42. L'élément 40 de verrouillage est par exemple réalisé en matière plastique.

Chaque patte 38 de fixation comporte une partie 43 mâle de fixation qui s'étend en saillie orthogonalement à la direction axiale de la patte 38 en direction d'une partie 45 de fixation complémentaire, ici femelle, du moyeu 13 central de la roue 10. Dans la configuration représentée aux figures, la partie 43 mâle de chaque patte 38 de fixation s'étend radialement vers l'extérieur.

La partie 45 femelle de fixation du moyeu 13 est formée par un épaulement annulaire radial qui est tourné vers l'arrière comme cela est représenté à la figure 5. A cet effet, le moyeu 13 comporte une gorge intérieure qui est agencée en arrière de l'orifice d'accès au moyeu 13. La partie 43 mâle de chaque patte 38 de fixation est formée par une face d'épaulement inclinée vers l'intérieur portée par la patte 38.

Chaque patte 38 de fixation est flexible entre :
- une position de verrouillage, comme représentée en traits pleins à la figure 5, dans laquelle la partie 43 mâle de fixation de chaque patte 38 de fixation est destinée à être emboîtée élastiquement orthogonalement à la direction axiale avec la partie 45 de fixation correspondante de forme complémentaire du moyeu 13 de la roue 10, et vers laquelle chaque patte de fixation est rappelée élastiquement ;
- et une position de libération, représentée en traits interrompus à la figure 5, dans laquelle chaque patte 38 de fixation est fléchie à la manière d'une poutre flexible radialement vers l'intérieur afin d'être déboîtée de la partie 45 femelle de fixation de la roue 10 pour permettre le montage ou le démontage de l'enjoliveur 10.

En d'autres termes, en position de verrouillage, les parties 43 mâles de fixation de chaque patte 38 s'étendent sur un cercle de diamètre supérieur à celui du moyeu 13, tandis qu'en position de déverrouillage, les parties 43 mâles de fixation sont rétractées vers l'intérieur de manière à permettre leur passage dans les deux sens à travers le moyeu 13 de la roue 10.

L'élément 40 de verrouillage comporte en outre une tige 44 centrale qui s'étend axialement vers l'avant depuis la face avant du plateau 42. La tige 44 s'étend coaxialement à l'axe "B" de rotation de la roue 10. L'extrémité avant libre de la tige 44 comporte une tête 46.

Comme illustré à la figure 5, l'élément 40 de verrouillage est destiné à être reçu coulissant axialement dans la jupe 36. Plus particulièrement, les pattes 38 de fixation sont agencées à l'intérieur de la jupe 36 tandis que le plateau 42 est agencé derrière le bord d'extrémité arrière libre de la jupe 36.

Le plateau 42 présente un diamètre extérieur qui est supérieur au diamètre intérieur de la jupe 36 pour limiter le déplacement axial vers l'avant de l'élément 40 de verrouillage par rapport au chapeau 26. Le plateau 42 présente un diamètre extérieur qui est égal au diamètre extérieur de la jupe 36 pour permettre son insertion axiale dans le moyeu 13. En position de butée du plateau 42 contre la jupe 36, les pattes 38 de fixation sont espacées axialement par rapport à la face 34 arrière du disque 34 central du chapeau 26.

La tête 46 de la tige 44 est reçue dans une cheminée 48 axiale centrale du disque 34 central du chapeau 26. La cheminée 48 présente une section de forme complémentaire de celle de la tête 26. Cette cheminée 48 centrale est débouchante axialement dans la face 32 avant du disque 28 central par l'intermédiaire d'une lumière, et elle s'étend axialement derrière la face 34 arrière du disque 28 central. L'orifice débouchant de la cheminée 48 est ici habilement dissimulé dans un logo qui orne la face 32 avant du disque 28 central.

La jupe 36 est ajourée de quatre fenêtres 49 qui sont agencées en coïncidence avec les pattes 38 de fixation de l'élément 40 de verrouillage. En outre, la partie 45 de fixation de la roue 10 étant annulaire, chaque fenêtre 49 est agencée en vis-à-vis de ladite partie 45 de fixation associée de la roue 10.

La tête 46 présente avantageusement une section radiale non circulaire pour permettre d'immobiliser l'élément 40 de verrouillage en rotation par rapport au chapeau 26. La tête 46 présente ici une section en forme de losange. Ceci permet d'assurer un bon positionnement de l'élément 40 de verrouillage par rapport au chapeau 26 de manière que les pattes 38 de fixation sont bien en coïncidence avec les fenêtres 49 de la jupe 36.

En position avant de butée de l'élément 40 de verrouillage contre la jupe 36, la tête 46 de la tige 44 affleure sensiblement à la face 32 avant du disque 28 central de manière à se confondre avec cette face 32 vu de l'extérieur.

La cheminée 48 centrale comporte au moins une face 50 d'épaulement qui s'étend radialement vers l'intérieur de manière à diminuer la section de passage de la cheminée 48 pour permettre le passage de la tige 44, mais pour limiter le coulissement de l'élément 40 de verrouillage vers l'arrière par butée de la tête 46 contre la face 50 d'épaulement.

Avantageusement, la face 50 d'épaulement est portée par une nervure déformable élastique pour permettre l'insertion de la tête 46 dans la cheminée 48 par déformation élastique de la nervure. Ce montage est avantageusement irréversible pour empêcher l'élément 40 de verrouillage de tomber dans le moyeu 13.

L'élément 40 de verrouillage est ainsi monté coulissant dans le chapeau 26 entre :
- une position de verrouillage dans laquelle les pattes 38 de fixation passent à travers les fenêtres 49 de la jupe 36 pour occuper leur position de fixation ;
- une position de déverrouillage dans laquelle les pattes 38 de fixation sont contraintes vers leur position de libération.

Lorsque l'élément 40 de verrouillage occupe sa position de verrouillage, la partie 43 de fixation des pattes 38 de fixation fait saillie radialement à l'extérieur de la jupe 36 de manière à être engagée en contact axial contre la partie 45 de fixation du moyeu 13 de la roue 10. L'enjoliveur 10 est alors immobilisé axialement par rapport à la roue 10.

Les pattes 38 de fixation sont rappelées élastiquement vers leur position de verrouillage par des moyens de rappel élastique. Comme représenté à la figure 5, les moyens de rappel élastiques sont ici formés par un anneau 52 élastique commun à toutes les pattes 38 de fixation qui est monté précontraint entre les faces internes des pattes 38 de fixation. Plus particulièrement, les faces tournées vers l'axe "B" des pattes 38 de fixation sont munies d'une gorge permettant de recevoir l'anneau 52 élastique. L'anneau 52 élastique fourni ainsi un effort élastique d'expansion radial des pattes 38 de fixation vers l'extérieur.

En outre les pattes 38 de fixation comportent une rampe 54 de guidage qui est tournée radialement vers l'extérieur et qui s'étend ici depuis le plateau 42 jusqu'à la partie 43 de fixation. Une extrémité avant de la rampe 54 de guidage fait ainsi saillie radialement vers l'extérieur par rapport à la jupe 26 à travers la fenêtre 49 associée lorsque l'élément 40 de verrouillage occupe sa position de verrouillage et que les pattes 38 de fixation occupent leur position de fixation.

La rampe 54 de guidage est destinée à être en contact avec un bord arrière de la fenêtre 49 associée à la patte 38. Lors du coulissement de l'élément 40 de verrouillage vers sa position de déverrouillage, les pattes 38 de fixation sont guidées vers leur position de libération à l'encontre de l'effort de rappel élastique de l'anneau 52 par contact entre la rampe 54 de guidage et le bord arrière de la fenêtre 49 formant une face de guidage.

Comme représenté à la figure 5 en traits interrompus, en position arrière de déverrouillage de l'élément 40 de verrouillage, la rampe 54 de guidage demeure en contact avec le bord arrière de la fenêtre 49 de manière que l'élément 40 de verrouillage soit rappelé élastiquement vers sa position de verrouillage par l'effort de rappel élastique exercé par l'anneau 52 via les pattes 38 de fixation.

Lors du montage de l'enjoliveur 22 sur la roue 10, l'utilisateur insère axialement la jupe 36 du chapeau 26 dans l'orifice d'accès au moyeu 13. L'élément 40 de verrouillage occupe alors sa position de verrouillage et les pattes 38 occupent leur position de fixation.

Pendant ce mouvement d'insertion, l'extrémité avant des rampes 54 de guidage en saillie à travers les fenêtres 49 entre en contact avec le bord de l'orifice d'accès au moyeu 13. Durant la suite du mouvement d'insertion, les pattes 38 de fixation sont poussées vers leur position de libération par contact entre la rampe 54 et le bord de l'orifice d'accès au moyeu 13. Puis, lorsque l'enjoliveur 22 est monté, la partie 43 de fixation des pattes 38 passe derrière la partie 45 de fixation de la roue 10, provoquant le rappel élastique des pattes 38 de fixation vers leur position de fixation.

Ainsi, durant la totalité de l'opération de montage, l'élément 40 de verrouillage occupe sa position de verrouillage.

Lors du démontage de l'enjoliveur 22, l'opérateur appui axialement sur la tête 46 de la tige 44 à travers la lumière de la cheminée 48. La tête 46 forme ainsi un bouton d'actionnement qui traverse le chapeau 26 pour permettre l'actionnement manuel de l'élément 40 de verrouillage après son montage.

Ce geste provoque le coulissement axial vers l'arrière de l'élément 40 de verrouillage par rapport au chapeau 26. Les pattes 38 de verrouillage sont alors guidées vers leur position de libération par les rampes 54. L'opérateur maintient alors la tête 46 enfoncée pendant qu'il extrait axialement le chapeau 26 du moyeu 13.

Avantageusement, les bras 30 de l'enjoliveur 22 sont déformables élastiquement. Lorsque l'enjoliveur 22 est monté sur la roue 10, les bras 30 sont déformés élastiquement de manière que leur extrémité libre exerce un effort axial de répulsion sur la roue 10. Ainsi, lors du démontage, l'effort d'extraction de l'enjoliveur 22 fourni par l'opérateur est assisté par l'effort élastique exercé par les bras 30 sur la roue 10.

Cet enjoliveur 22 peut avantageusement être monté et démonté de la roue 10 très facilement sans effort et sans recourir à un outillage spécial.

En outre, la tête 46 de l'élément 40 de verrouillage est aisément intégrée aux décorations ou logos qui ornent le chapeau 26. On obtient ainsi un enjoliveur 22 esthétique.

## Revendications

1. Enjoliveur (22) destiné à être fixé à une roue (10) de véhicule automobile tournant autour d'un axe (B) d'orientation axiale, l'enjoliveur (22) comportant :
- un chapeau (26) radial de roue qui est destiné à être monté par emboîtement axial sur la roue (10) pour en recouvrir au moins une partie, une face (34) arrière du chapeau (26) étant tournée vers la roue ;
- plusieurs pattes (38) de fixation qui sont flexibles entre une position de fixation dans laquelle une partie (43) de fixation de chaque patte (38) de fixation est destinée à être emboîtée élastiquement avec une partie (45) de fixation correspondante de forme complémentaire de la roue (10), et vers laquelle chaque patte (38) de fixation est rappelée élastiquement, et une position de libération dans laquelle chaque patte (38) de fixation est destinée à être déboîtée, les pattes (38) de fixation étant portées par un élément (40) commun de verrouillage; **caractérisé en ce que** l'élément commun de verrouillage est monté mobile dans le chapeau (26) entre une position de verrouillage dans laquelle les pattes (38) de fixation occupent leur position de fixation et une position de déverrouillage dans laquelle les pattes (38) de fixation sont contraintes vers leur position de libération par contact entre chaque patte (38) et une face associée de guidage du chapeau (26).

2. Enjoliveur (22) selon la revendication précédente, **caractérisé en ce que** chaque patte (38) de verrouillage s'étend axialement.

3. Enjoliveur (22) selon l'une quelconque des revendications précédentes, **caractérisé en ce que** la partie (45) de fixation de chaque patte (38) est formée par une partie mâle.

4. Enjoliveur (22) selon la revendication précédente, **caractérisé en ce que** l'élément (40) de verrouillage est monté coulissant axialement dans une jupe (36) fixe du chapeau (26) qui s'étend axialement depuis la face (34) arrière du chapeau (26).

5. Enjoliveur (22) selon la revendication précédente, **caractérisé en ce que** la jupe (36) est munie de fenêtres (49) de passage de la partie (43) de fixation de chaque patte (38) de fixation à l'extérieur de la jupe (36) lorsque l'élément (40) de verrouillage occupe sa position de verrouillage, chaque fenêtre (49) étant destinée à être agencée en vis-à-vis d'une partie (45) de fixation associée de la roue (10).

6. Enjoliveur (22) selon l'une quelconque des revendications précédentes, **caractérisé en ce que** les pattes (38) de fixation sont réalisées en une seule pièce avec l'élément (40) de verrouillage.

7. Enjoliveur (22) selon la revendication précédente, **caractérisé en ce que** les pattes (38) de fixation sont guidées vers leur position de libération lors du coulissement de l'élément (40) de verrouillage vers sa position de déverrouillage par contact entre une rampe (54) de guidage portée par chaque patte (38) avec un bord de la fenêtre (49).

8. Enjoliveur (22) selon la revendication précédente, **caractérisé en ce qu'**en position arrière de déverrouillage de l'élément (40) de verrouillage, la rampe (54) de guidage demeure en contact avec le bord de la fenêtre (49) de manière que l'élément (40) de verrouillage soit rappelé élastiquement vers sa position de verrouillage par l'effort de rappel élastique des pattes (38) de fixation vers leur position de fixation.

9. Enjoliveur (22) selon l'une quelconque des revendications précédentes, **caractérisé en ce que** les pattes (38) de fixation sont portées par l'élément (40) de verrouillage selon un agencement circulaire, les moyens de rappel élastiques étant formés par un anneau (52) élastique commun à toutes les pattes (38) qui est monté précontraint entre les faces internes des pattes (38) de fixation.

10. Enjoliveur (22) selon l'une quelconque des revendications précédentes, **caractérisé en ce que** l'élément (40) de verrouillage est muni d'un bouton (46) d'actionnement qui traverse le chapeau (26à à la faveur d'une lumière pour permettre l'actionnement manuel de l'élément (40) de verrouillage après son montage.

## Patentansprüche

1. Zierblende (22), die dazu bestimmt ist, an einem Rad (10) eines Kraftfahrzeugs befestigt zu werden, das um eine Achse (B) axialer Ausrichtung dreht, wobei die Zierblende (22) aufweist:
- eine radiale Radkappe (26), die dazu bestimmt ist, durch axiales Aufstecken auf das Rad (10) montiert zu werden, um mindestens einen Teil davon zu bedecken, wobei eine Rückseite (34) der Kappe (26) zum Rad weist;
- mehrere Befestigungslaschen (38), die zwischen einer Befestigungsstellung, in der ein Befestigungsbereich (43) jeder Befestigungslasche (38) dazu bestimmt ist, elastisch mit einem entsprechenden Befestigungsbereich (45) komplementärer Form des Rads (10) zusammengesteckt zu werden, und in die jede Befestigungslasche (38) elastisch zurückgestellt wird, und einer Freigabestellung flexibel sind, in der jede Befestigungslasche (38) dazu bestimmt ist, ausgebaut zu werden, wobei die Befestigungslaschen (38) von einem gemeinsamen Verriegelungselement (40) getragen werden;
**dadurch gekennzeichnet, dass** das gemeinsame Verriegelungselement in die Kappe (26) zwischen einer Verriegelungsstellung, in der die Befestigungslaschen (38) ihre Befestigungsstellung einnehmen, und einer Entriegelungsstellung beweglich montiert ist, in der die Befestigungslaschen (38) durch Kontakt zwischen jeder Lasche (38) und einer zugeordneten Führungsseite der Kappe (26) in ihre Freigabestellung gezwungen werden.

2. Zierblende (22) nach dem vorhergehenden Anspruch, **dadurch gekennzeichnet, dass** jede Verriegelungslasche (38) sich axial erstreckt.

3. Zierblende (22) nach einem der vorhergehenden Ansprüche, **dadurch gekennzeichnet, dass** der Befestigungsbereich (45) jeder Lasche (38) von einem Einsteckbereich geformt wird.

4. Zierblende (22) nach dem vorhergehenden Anspruch, **dadurch gekennzeichnet, dass** das Verriegelungselement (40) axial gleitend in eine ortsfeste Schürze (36) der Kappe (26) montiert ist, die sich axial von der Rückseite (34) der Kappe (26) erstreckt.

5. Zierblende (22) nach dem vorhergehenden Anspruch, **dadurch gekennzeichnet, dass** die Schürze (36) mit Durchgangsfenstern (49) für den Befestigungsbereich (43) jeder Befestigungslasche (38) nach außerhalb der Schürze (36) versehen ist, wenn das Verriegelungselement (40) seine Verriegelungsstellung einnimmt, wobei jedes Fenster (49) dazu bestimmt ist, gegenüber einem dem Rad (10) zugeordneten Befestigungsbereich (45) angeordnet zu sein.

6. Zierblende (22) nach einem der vorhergehenden Ansprüche, **dadurch gekennzeichnet, dass** die Befestigungslaschen (38) aus einem Stück mit dem Verriegelungselement (40) hergestellt werden.

7. Zierblende (22) nach dem vorhergehenden Anspruch, **dadurch gekennzeichnet, dass** die Befestigungslaschen (38) durch Kontakt zwischen einer von jeder Lasche (38) getragenen Führungsrampe (54) mit einem Rand des Fensters (49) beim Gleiten des Verriegelungselements (40) in seine Entriegelungsstellung in ihre Freigabestellung geführt werden.

8. Zierblende (22) nach dem vorhergehenden Anspruch, **dadurch gekennzeichnet, dass** in der hinteren Entriegelungsstellung des Verriegelungselements (40) die Führungsrampe (54) mit dem Rand des Fensters (49) in Kontakt bleibt, damit das Verriegelungselement (40) durch die elastische Rückstellkraft der Befestigungslaschen (38) in ihre Befestigungsstellung in seine Verriegelungsstellung zurückgeholt wird.

9. Zierblende (22) nach einem der vorhergehenden Ansprüche, **dadurch gekennzeichnet, dass** die Befestigungslaschen (38) vom Verriegelungselement (40) gemäß einer kreisförmigen Anordnung getragen werden, wobei die elastischen Rückstelleinrichtungen von einem allen Laschen (38) gemeinsamen elastischen Ring (52) gebildet werden, der vorgespannt zwischen die Innenseiten der Befestigungslaschen (38) montiert wird.

10. Zierblende (22) nach einem der vorhergehenden Ansprüche, **dadurch gekennzeichnet, dass** das Verriegelungselement (40) mit einem Betätigungsknopf (46) versehen ist, der die Kappe (26) dank einer Öffnung durchquert, um die manuelle Betätigung des Verriegelungselements (40) nach seiner Montage zu erlauben.

## Claims

1. Trim (22) intended to be attached to a motor vehicle wheel (10) rotating about an axially oriented axis (B), the trim (22) comprising:
- a radial wheel cap (26) which is intended to be push-fitted axially onto the wheel (10) in order to cover at least part thereof, a rear face (34) of the cap (26) facing towards the wheel;
- several fixing tabs (38) which are flexible between a fixing position in which a fixing part (43) of each fixing tab (38) is intended to be fitted elastically to a corresponding fixing part (45) of complementary shape belonging to the wheel (10), and towards which each fixing tab (38) is elastically returned, and a releasing position in which each fixing tab (38) can be disengaged, fixing tabs (38) being borne by a common locking element (40);
**characterized in that** the common locking element is mounted with the ability to move in the cap (26) between a locking position in which the fixing tabs (38) occupy their fixing position, and an unlocking position in which the fixing tabs (38) are forced into their releasing position through contact between each tab (38) and an associated guide face belonging to the cap (26).

2. Trim (22) according to the preceding claim, **characterized in that** each locking tab (38) extends axially.

3. Trim (22) according to either one of the preceding claims, **characterized in that** the fixing part (45) of each tab (38) is formed by a male part.

4. Trim (22) according to the preceding claim, **characterized in that** the locking element (40) is mounted with the ability to slide axially in a fixed skirt (36) of the cap (26) which extends axially from the rear face (34) of the cap (26).

5. Trim (22) according to the preceding claim, **characterized in that** the skirt (36) is provided with apertures (49) for the passage of the fixing part (43) of each fixing tab (38) to outside the skirt (36) when the locking element (40) is occupying its locking position, each aperture (49) being intended to be positioned facing an associated fixing part (45) of the wheel (10).

6. Trim (22) according to any one of the preceding claims, **characterized in that** the fixing tabs (38) are produced as one piece with the locking element (40) .

7. Trim (22) according to the preceding claim, **characterized in that** the fixing tabs (38) are guided towards their releasing position as the locking element (40) slides towards its unlocking position by contact between a guide ramp (54) borne by each tab (38) with an edge of the aperture (49).

8. Trim (22) according to the preceding claim, **characterized in that** when the locking element (40) is in the rear unlocking position, the guide ramp (54) remains in contact with the edge of the aperture (49) so that the locking element (40) is elastically returned to its locking position by the elastic return force of the fixing tabs (38) returning towards their fixing position.

9. Trim (22) according to any one of the preceding claims, **characterized in that** the fixing tabs (38) are borne by the locking element (40) in a circular arrangement, the elastic return means being formed by an elastic ring (52) common to all the tabs (38) and mounted under preload between the internal faces of the fixing tabs (38).

10. Trim (22) according to any one of the preceding claims, **characterized in that** the locking element (40) is equipped with an actuating button (46) which passes through the cap (26) by virtue of a slot so as to allow the locking element (40) to be actuated manually after it has been fitted.
